## Europäisches Patentamt
## European Patent Office
## Office européen des brevets

(19)

(11) Numéro de publication: **0 007 845**
**B1**

(12) **FASCICULE DE BREVET EUROPEEN**

(45) Date de publication du fascicule du brevet: 04.05.83

(51) Int. Cl.³: **B 60 K 37/00**

(21) Numéro de dépôt: 79400476.2

(22) Date de dépôt: 10.07.79

(54) Tableau de bord pour véhicule automobile.

(30) Priorité: 25.07.78 FR 7821967
22.05.79 FR 7913011

(43) Date de publication de la demande:
06.02.80 Bulletin 80/3

(45) Mention de la délivrance du brevet:
04.05.83 Bulletin 83/18

(84) Etats contractants désignés:
DE GB IT

(56) Documents cités:
BE - A - 736 713
CH - A - 121 851
DE - A - 2 610 284
DE - B - 1 042 927
DE - C - 256 317
DE - C - 443 857
US - A - 2 504 582
US - A - 3 807 350

ENGINEERING MATERIALS AND DESIGN, vol. 20, no. 4, avril 1976, LONDON, GB K. GARRET: "Industrial instrumentation" pages 13—17

(73) Titulaire: SOCIETE ANONYME AUTOMOBILES CITROEN
117 à 167, Quai André Citroen
F-75747 Paris Cedex 15 (FR)

(73) Titulaire: AUTOMOBILES PEUGEOT
75, avenue de la Grande Armée
F-75116 Paris (FR)

(72) Inventeur: Moreau, Michel Louis
110, rue Gabriel Peri
F-28000 Chartres (FR)
Inventeur: Harmand, Michel
3, rue Saint-Exupéry
F-92360 Meudon-la-Forêt (FR)

(74) Mandataire: Fabien, Henri et al,
PEUGEOT SA. DAT / BPI 18, rue des Fauvelles
F-92250 La Garenne-Colombes (FR)

Courier Press, Leamington Spa, England.

## Tableau de bord pour véhicule automobile

L'invention concerne un tableau de bord pour véhicule automobile dans lequel sont groupés les moyens d'affichage de l'ensemble des paramètres de fonctionnement mis à la disposition du conducteur et tout particulièrement l'affichage de la vitesse du véhicule.

L'invention a pour but la réalisation d'un tableau de bord permettant de regrouper toutes les informations indispensables à la sécurité et au confort de conduite en focalisant particulièrement l'attention du conducteur sur l'appréciation de la vitesse de son véhicule par rapport aux conditions extérieures et notamment sur la marge de vitesse autorisée restant à sa disposition.

Il est connu d'effectuer l'affichage de la vitesse, pour une partie au moins de la gamme des vitesses, sur des échelles verticales (brevet allemand 443.857) ou sensiblement horizontales et superposées, chaque échelle étant affectée à une gamme particulière de vitesses qui sont d'autant plus élevées que ladite échelle est située plus haut dans le champ de vision du conducteur.

Selon l'invention, un tableau de bord du genre en question est caractérisé en ce que la longueur des échelles d'affichage de la vitesse est sensiblement inversement proportionnelle à la hauteur de la position qu'elles occupent dans le champ de vision du conducteur, lesdites échelles étant disposées les unes par rapport aux autres de manière à former une zone d'affichage triangulaire.

Selon une autre caractéristique de l'invention il est prévu en outre, pour les vitesses supérieures à une valeur prédéterminée qui est de préférence la valeur maximale pouvant être affichée sur l'échelle horizontale la plus élevée dans le champ de vision du conducteur, un emplacement fixe d'affichage numérique situé au-dessus de ladite échelle.

Il est de plus avantageux que l'affichage numérique des vitesses supérieures à cette valeur prédéterminée s'effectue à l'intérieur d'un triangle semblable à celui symbolisant le signal de détresse, cette forme géométrique évoquant par ailleurs l'idée de vitesse de pointe.

Un tableau de bord conforme à l'invention est particulièrement bien adapté à l'emploi des diverses formes d'affichage moderne analogique ou digital faisant appel aux tubes et matériaux électroluminescents ou bien aux cristaux liquids.

Une exemple de réalisation fait l'objet de la description qui suit, en référence aux dessins annexés dans lesquels:

— La fig. 1 est une vue en plan de la face du tableau de bord vue par le conducteur.

— La fig. 2 est un détail agrandi montrant un mode de réalisation d'une échelle d'affichage correspondant à une gamme de vitesses.

— La fig. 3 est une variante du mode d'affichage des vitesses illustré par la figure 1.

— La fig. 4 illustre un autre mode d'affichage des vitesses.

— La fig. 5 illustre une variante du mode d'affichage suivant la figure 4.

— Les fig. 6 et 7 illustrent l'apparition d'une information particulière dans l'une ou l'autre des réalisations suivant les figures 4 et 5.

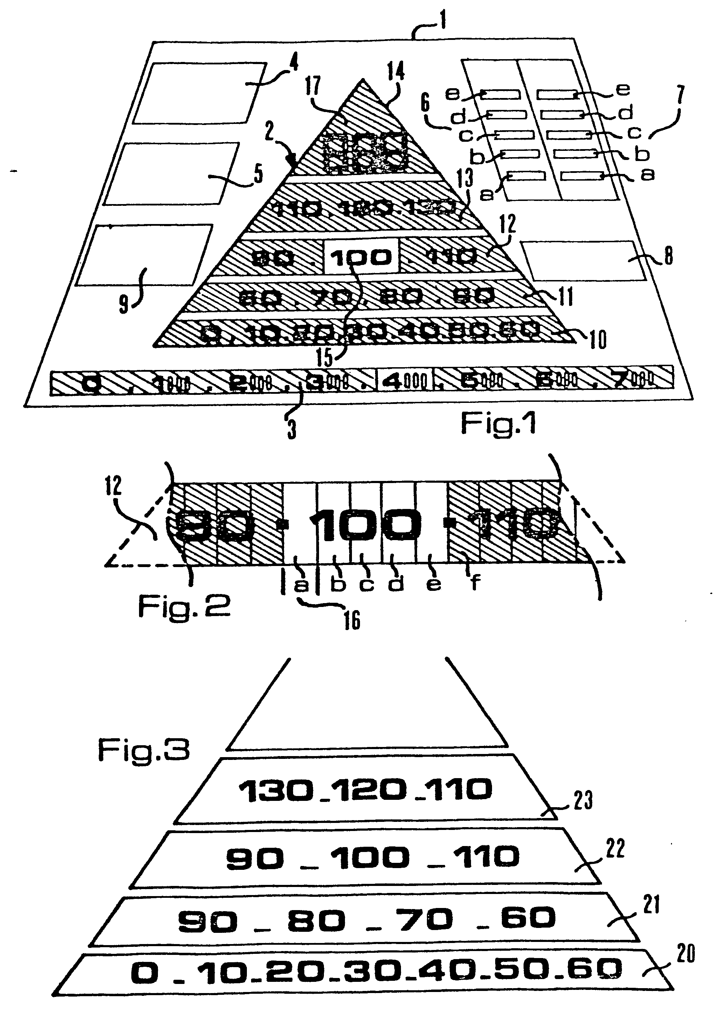

La zone générale d'affichage, visible par le conducteur, est représentée à la figure 1. Les informations que fournit le tableau de bord sont vues à travers une plaque translucide 1. La plaque 1 a la forme d'un trapèze isocèle dont les bases sont horizontales. Une zone triangulaire 2 d'affichage des vitesses est disposée au centre du trapèze. La zone 2 est de préférence un triangle isocèle disposé symétriquement par rapport à l'axe de symétrie du trapèze, le sommet de ce triangle étant orienté vers le haut du champ de vision du conducteur.

Les autres zones d'affichage entourent la zone 2. Elles comportent un compte-tours 3 à affichage linéaire disposé suivant une des bases du trapèze, un totalisateur kilométrique 4, une montre 5 à affichage numérique, des jauges à carburant 6 et à huile 7 ainsi que des zones 8 et 9 dans lesquelles sont disposés les voyants d'alerte et de contrôle.

Les inscriptions figurant sur la plaque 1 telles que les chiffres ou les contours des zones d'affichage sont imprimées au dos de la plaque 1 au moyen par exemple d'une sérigraphie noire. Ces inscriptions sont visibles, soit par l'éclairage naturel, soit par transparence grâce à un éclairage auxiliaire disposé derrière la plaque 1.

La zone 2 est divisée en quatre échelles horizontales 10, 11, 12 et 13 et un triangle 14 situé au sommet. Les échelles 10 à 13 sont constituées de bandes chacune de largeur constante limitées à chaque extrémité par les côtés du triangle délimitant la zone 2. La longueur des échelles 10 à 13 est ainsi sensiblement inversement proportionnelle à la hauteur de la position qu'elles occupent dans la zone 2.

Chaque échelle 10 à 13 correspond à une gamme de vitesses. Les vitesses sont croissantes de la gauche vers la droite et de bas en haut.

L'échelle 10 correspond aux vitesses urbaines (inférieures ou égales à 60 Km/h), l'échelle 11 aux vitesses de routes normales (inférieures ou égales à 90 Km/h), l'échelle 12 aux vitesses de voies expresses à chaussées séparées (inférieures ou égales à 110 Km/h) et l'échelle 13 aux vitesses d'autoroutes (inférieures ou égales à 130 Km/h). Chaque échelle commence à la vitesse maximale indiquée par l'échelle qui lui est inférieure. Bien entendu ces valeurs pourraient être adaptées à chaque législation. On notera de plus que la largeur des échelles croît avec la valeur moyenne des vitesses de la gamme considérée.

Le conducteur dispose ainsi de la combinaison des 3 critères suivants, en plus de l'inscription des vitesses, pour identifier chaque gamme de vitesses: hauteur de l'échelle correspondante dans son champ de vision, longueur et largeur de cette échelle.

Pour faciliter encore plus l'identification des différentes gammes de vitesses et sensibiliser encore mieux l'attention du conducteur aux vitesses élevées, il est avantageux que chaque échelle soit d'une couleur différente spécifique allant, par exemple, du vert pour l'échelle 10 au rouge pour l'échelle 13, les échelles 11 et 12 étant respectivement jaune et orange.

En fonctionnement, la zone correspondant à la vitesse réalisée par le véhicule est localement plus fortement éclairée en utilisant par exemple de façon connue des éléments électroluminescents réalisant une surface mobile lumineuse 15 placée derrière la plaque translucide 1.

Ainsi sur la Fig. 2, où est représentée une portion agrandie de l'échelle des vitesses 12, les secteurs 16 sont des éléments électroluminescents tous identiques alignés au dos de la plaque 1 le long de l'échelle 12.

La largeur de chacun des secteurs 16 correspond à une variation de la vitesse de 2 Km/h. Cinq secteurs contigus sont simultanément excités et donc lumineux, le secteur central correspondant à la vitesse réalisée.

La vitesse étant par exemple de 100 Km/h les secteurs 16a, 16b, 16c, 16d, 16e sont excités, si la vitesse augmente de 2 Km/h le secteur 16a n'est plus excité alors que le secteur 16f le devient. On réalise ainsi une surface mobile lumineuse 15 qui se déplace pas à pas en fonction de la vitesse.

On pourrait de façon équivalente utiliser pour réaliser les secteurs 16 des cristaux liquides devenant opaques lorsqu'ils sont excités, dans ce cas les secteurs correspondants à la vitesse réalisée ne seraient pas excités et laisseraient passer la lumière d'un éclairage général situé derrière la plaque translucide 1.

Selon une variante non représentée, au lieu d'utiliser une surface mobile lumineuse éclairant par transparence les échelles d'affichage de la vitesse, les chiffres et les graduations intermédiaires pourraient être eux-mêmes des signes en matériau électroluminescent.

A l'intérieur de traingle 14, dont une côté est horizontal et le sommet opposé le point le plus élevé de la zone 2, est aménagé un dispositif 17 d'affichage numérique de la vitesse. Le dispositif 17 affiche les vitesses supérieures à la vitesse maximale de l'échelle 13, donc supérieures à 130 Km/h.

Les dimensions des chiffres du dispositif 17 sont nettement supérieures à celles des chiffres des échelles horizontales 10 à 13. Le dispositif 17 peut faire appel à tout type connu d'affichage numérique par exemple des tubes électroluminescents ou des cristaux liquides; il comprend trois chiffres constitués chacun, de manière classique, de sept segments.

On remarquera que la largeur de la zone d'affichage de la vitesse se rétrécit et monte dans le champ de vision du conducteur au fur et à mesure que la vitesse croît. Ceci focalise l'attention du conducteur sur la réduction concomitante de la marge de vitesse autorisée qui reste à sa disposition et qui devient nulle quand la vitesse a atteint les valeurs affichées par le dispositif 17 dont la forme triangulaire évoque le signe normalisé du signal de détresse ainsi que la notion de vitesse de pointe.

Le saut de la surface mobile lumineuse 15 d'une échelle à la suivante attire l'attention du conducteur lors du passage de la vitesse au-delà d'une valeur limite intermédiaire, par exemple 60 Km/h en zone urbaine.

Cet effet peut être accentué par la présence simultanée de deux surfaces lumineuses au moment du franchissement de la vitesse limite, l'une à droite sur l'échelle inférieure, l'autre à gauche sur l'échelle immédiatement supérieure.

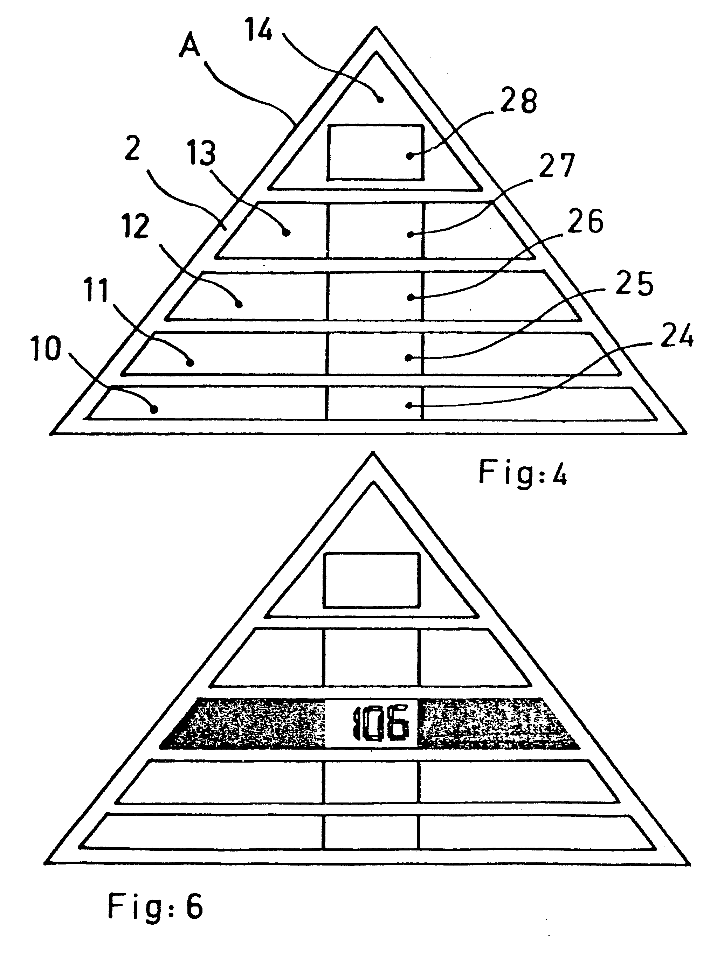

Sur la Fig. 3 on a représenté une variante du mode d'affichage des vitesses dans laquelle, pour chaque gamme de vitesse correspondant à une échelle (20, 21, 22 ou 23) sensiblement horizontale, l'affichage se déplace dans le sens inverse de celui de l'affichage des échelles (20 à 23) immédiatement inférieures ou supérieures ceci pour un même sens de variation de la vitesse.

La Fig. 4 montre un autre mode d'affichage des vitesses dans lequel l'information en clair se limite et se développe successivement au niveau d'un spot fixe unique intégré à chaque échelle superposée, chacune desdites échelles étant essentiellement matérialisée par une bande contenant le spot, la couleur spécifique de cette échelle s'étandant sur toute la longueur de ladite bande.

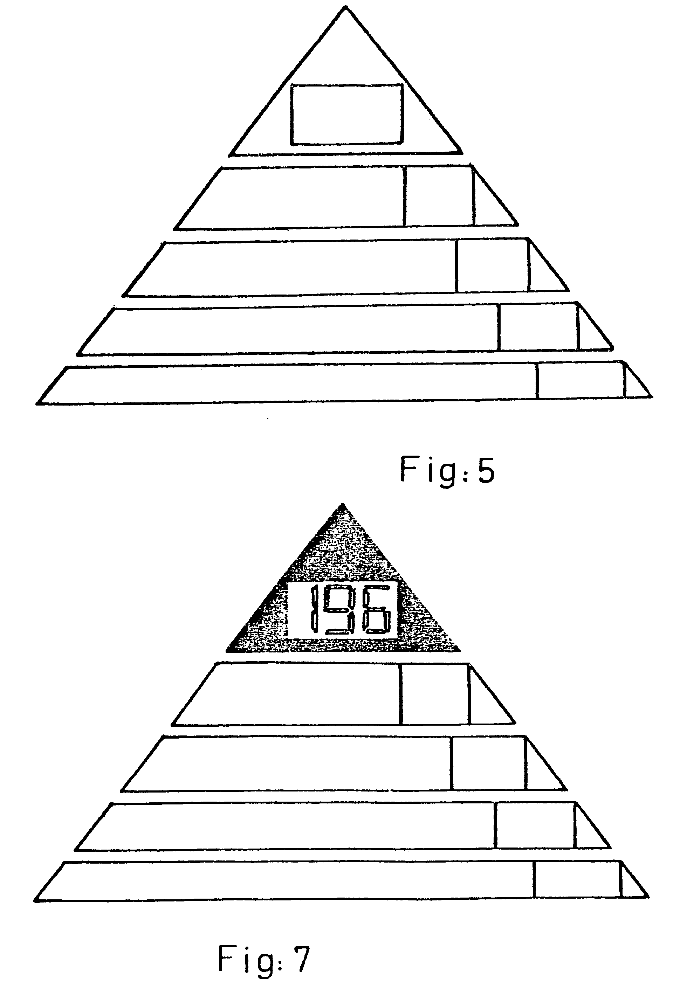

Une première forme de réalisation (Fig. 4) présente un affichage "en clair" médian à progression verticale, tandis qu'une variante de réalisation (Fig. 5) présente un affichage "en clair" déporté latéralement et progressant parallèlement à un des flancs du périmètre délimitant la zone d'information, les Fig. 6 et 7 matérialisant l'apparition d'une information particulière dans l'une ou l'autre des formes de réalisation précitées.

La première forme de réalisation matérialisée par une enveloppe triangulaire A se compose essentiellement d'une zone d'affichage 2 de même géométrie se décomposant en une pluralité de bandes horizontales superposées 10, 11, 12, 13 et d'une zone de crête 14 (Fig. 4).

En région médiane de chacune de ces bandes 10, 11, 12, 13 sont disposés respectivement des spots d'affichage 24, 25, 26, 27 se superposant et formant une colonne verticale dont chaque segment constitué par un spot est successivement le siège des informations correspondant à la gamme des valeurs de chaque séquence, un spot culminant 28 s'inscrivant à l'intérieur de la zone 14 et étant réservé aux informations d'alerte ou aux valeurs de vitesses supérieures à une valeur prédéterminée.

Le principe des variations de couleur des affichages et les procédés de visualisation déjà mentionnés restent les mêmes et la teinte spécifique de l'information apparaîssant au niveau du spot est reproduite et s'étend sur toute la longueur de la bande contenant ledit spot durant la période correspondante au déroulement de la gamme des vitesses intéressant la gamme de la séquence concernée.

La figure 6 illustre une phase de fonctionnement correspondant à une gamme intermédiaire de vitesse.

L'autre forme de réalisation objet de la figure 5 concerne un dispositif d'affichage déporté sur un des flancs de l'écran 2. Sous cette forme de réalisation l'information reste asservie à la même loi de synchronisme des affichages et de leur coloration rappelée au niveau des bandes latérales, la figure 7 étant un exemple de fonctionnement pour un affichage correspondant à une gamme de vitesses supérieures à une valeur prédéterminée comme décrit précédemment.

Les moyens d'affichage du compte-tours 3 sont semblables à ceux utilisés pour les échelles d'affichage des vitesses. Ces moyens réalisent, soit une surface mobile lumineuse qui se déplace en fonction du régime du moteur, soit un segment lumineux dont la longueur est proportionnelle au régime du moteur.

Les jauges 6 et 7 sont constituées de secteurs horizontaux superposés 6a, b, c, d, e et 7a, b, c, d, e formés également de matériaux électroluminescents, de tubes électroluminescents ou de cristaux liquides.

Elles fournissent une représentation analogique du niveau mesuré.

Il va de soi que de nombreuses modifications peuvent être apportées au tableau de bord décrit et représenté sans sortir du cadre de l'invention. Par exemple l'échelle sur laquelle est affichée la vitesse réalisée pourrait être plus fortement éclairée que les autres échelles.

## Revendications

1. Tableau de bord pour véhicule automobile, dans lequel sont groupés les moyens d'affichage de l'ensemble des paramètres de fonctionnement mis à la disposition du conducteur, et tout particulièrement l'affichage de la vitesse du véhicule, dans lequel l'affichage de lav vitesse s'effectue, pour une partie au moins de la gamme des vitesses, sur des échelles sensiblement horizontales et superposees (10 à 13 20 à 23), chaque échelle étant affectée à une gamme particulière de vitesses qui sont d'autant plus élevées que ladite échelle est située plus haut dans le champ de vision du conducteur, caractérisé en ce que la longueur des échelles d'affichage de la vitesse (10 à 13 ou 20 à 23) est sensiblement inversement proportionnelle à la hauteur de la position qu'elles occupent dans le champ du vision du conducteur, lesdites échelles étant disposées les unes par rapport aux autres de manière à former une zone d'affichage (2) triangulaire.

2. Tableau de bord suivant la revendications 1, caractérisé en ce qu'il est prévu, pour les vitesses supérieures à une valeur prédéterminée, un emplacement fixe (14) d'affichage numérique (17) situé au-dessus de l'échelle (13 ou 23) la plus élevée.

3. Tableau de bord suivant la revendication 2 caractérisé en ce que les dimensions des chiffres utilisés pour l'affichage numérique (17) sont nettement supérieures à celles des chiffres figurant sur les échelles (10 à 13 ou 20 à 23).

4. Tableau de bord suivant l'une quelconque des revendications 2 et 3, caractérisé en ce que l'affichage des vitesses supérieures à la valeur prédéterminée, s'effectue à l'intérieur d'un triangle (14) dont un côté est horizontal et le sommet opposé le point le plus élevé de la zone (2) d'affichage des vitesses.

5. Tableau de bord suivant l'une quelconque des revendications précédentes, caractérisé en ce que la zone (2) d'affichage des vitesses constitue un triangle isocèle.

6. Tableau de bord suivant l'une quelconque des revendications précédentes, caractérisé en ce que l'affichage de la vitesse sur les échelles (10 à 13 ou 20 à 23) est réalisé par une surface mobile lumineuse qui se déplace pas à pas en fonction de la vitesse.

7. Tableau de bord suivant l'une quelconque des revendications précédentes, caractérisé en ce que, pour chaque gamme de vitesses correspondant à une échelle (10, 11, 12 ou 13), l'affichage se déplace de la gauche vers la droite quand la vitesse croît.

8. Tableau de bord suivant l'une quelconque des revendications, précédentes, caractérisé en ce que, pour chaque gamme de vitesses correspondant à une échelle (20, 21, 22 ou 23), l'affichage se déplace dans le sens inverse de celui de l'affichage des échelles immédiatement inférieure ou supérieure ceci pour un même sens de variation de la vitesse.

9. Tableau de bord suivant l'une quelconque des revendications 1, á 5, caractérisé en ce que l'affichage en clair de la vitesse est réalisé sur chaque échelle (10, 11, 12, ou 13) par un spot fixe unique (24), (25), (26), (27), (28), combinant son information á un signal coloré spécifique de chaque échelle s'étendant sur toute la longueur de celle-ci.

10. Tableau de bord pour véhicule automobile suivant la revendication 9, caractérisé en ce que les spots (24), (25), (26), (27), (28) sont disposés en région médiane de la zone d'affichage (2) et que leur empilage constitue une colonne centrale verticale.

11. Tableau de bord suivant la revendication 9, caractérisé en ce que, les spots (24), (25), (26), (27), (28) sont latéralement déportés contre un des flancs de la zone d'affichage (2).

12. Tableau de bord suivant l'une quelconque des revendications 1, 7 et 8, caractérisé en ce que l'affichage de la vitesse sur les échelles (10 à 13 ou 20 à 23) est réalisé par l'excitation de signes constitués en un matériau électroluminescent.

13. Tableau de bord suivant l'une quelconque des revendications précédentes, caractérisé en ce que chaque échelle (10 à 13 ou 20 à 23) est d'une couleur différente des autres échelles.

14. Tableau de bord suivant l'une quelconque des revendications précédentes, caractérisé en ce que toutes les informations qu'il affiche s'inscrivent dans un trapèze dont la partie centrale est occupée par la zone (2) d'affichage des vitesses autour de laquelle sont répartis les emplacements d'affichage des autres informations telles que totalisateur kilométrique (4) jauge à carburant (6) et témoins d'alerte.

15. Tableau de bord suivant l'une quelconque des revendications précédentes, caractérisé en ce qu'il comporte un compte-tours (3) à affichage linéaire suivant une échelle horizontale.

## Patentansprüche

1. Armaturenbrett für Kraftfahrzeuge, bei dem die Anzeigeeinrichtungen aller Funktionsparameter, insbesondere die Anzeige der Fahrzeuggeschwindigkeit, dem Fahrer verfügbar gruppiert sind, und bei dem die Anzeige der Geschwindigkeit für wenigstens einen Teil des Geschwindigkeitsbereichs auf im wesentlichen waagerechten und übereinander liegenden Skalen (10 bis 13 und 20 bis 23) erfolgt, wobei jede Skala einem besonderen Bereich von Geschwindigkeiten zugeordnet ist, die umso höher sind, als die Skala im Gesichtsfeld des Fahrers höher gelegen ist, dadurch gekennzeichnet, daß die Länge der Skalen (10 bis 13 und 20 bis 23) zur Anzeige der Geschwindigkeit im wesentlichen umgekehrt proportional zur Höhe der Stellung ist, die sie im Gesichtsfeld des Fahrers einnehmen, wobei, die Skalen zueinander so angeordnet sind, daß sie eine dreieckige Anzeigezone (2) bilden.

2. Armaturenbrett nach Anspruch 1, dadurch gekennzeichnet, daß für Geschwindigkeiten über einem gegebenen Wert über der Obersten Skala (13 oder 23) ein fester Ort (14) zur numerischen Anzeige vorgesehen ist.

3. Armaturenbrett nach Anspruch 2, dadurch gekennzeichnet, daß die Abmessungen der zur numerischen Anzeige verwendeten Ziffern (17) deutlich gröber als diejenige der auf den Skalen (10 bis 13 und 20 bis 23) gebildeten Ziffern sind.

4. Armaturenbrett nach Anspruch 2 und 3, dadurch gekennzeichnet, daß die Anzeige von Geschwindigkeiten über dem gegebenen Wert innerhalb eines Dreiecks (14) erfolgt, von dem eine Seite waagerecht und der gegenüberliegende Scheitel der höchste Punkt der Zone (2) zur Anzeige der Geschwindigkeiten ist.

5. Armaturenbrett nach einem der vorhergehenden Ansprüche, dadurch gekennzeichnet, daß die Zone (2) zur Anzeige der Geschwindigkeiten ein gleichschenkeliges Dreieck bildet.

6. Armaturenbrett nach einem der vorhergehenden Ansprüche, dadurch gekennzeichnet, daß die Anzeige der Geschwindigkeiten auf den Skalen (10 bis 13 oder 20 bis 23) durch eine bewegliche Leuchtfläche erfolgt, die sich in Abhängigkeit von der Geschwindigkeit schrittweise verschiebt.

7. Armaturenbrett nach einem der vorhergehenden Ansprüche, dadurch gekennzeichnet, daß für jeden einer Skala (10, 11, 12 oder 13) entsprechenden Geschwindigkeitsbereich sich die Anzeige bei zunehmender Geschwindigkeit von links nach rechts verschiebt.

8. Armaturenbrett nach einem der vorhergehenden Ansprüche, dadurch gekennzeichnet, daß für jeden einer Skala (20, 21, 22 oder 23) entsprechenden Geschwindigkeitsbereich sich die Anzeige entgegengesetzt zur Anzeigerichtung der unmittelbar darunter oder darüber liegenden Skalen verschiebt, und zwar für ein und denselben Veränderungssinn der Geschwindigkeit.

9. Armaturenbrett nach einem der Ansprüche 1 bis 5, dadurch gekennzeichnet, daß die helle Anzeige der Geschwindigkeit auf jeder Skala (10, 11, 12 oder 13) durch einen einzigen feststehenden Leuchtfleck (24; 25; 26; 27; 28) erfolgt, der seine Information mit einem für jede Skala spezifischen Farbsignal kombiniert, das sich über die gesamte Länge der Skala erstreckt.

10. Armaturenbrett für Kraftfahrzeuge nach Anspruch 9, dadurch gekennzeichnet, daß die Leuchtflecke (24; 25; 26; 27; 28) im mittleren Bereich der Anzeigezone (2) angeordnet sind und daß ihre Anordnung übereinander eine zentrale senkrechte Säule bildet.

11. Armaturenbrett nach Anspruch 9, dadurch gekennzeichnet, daß die Leuchtflecke (24; 25; 26; 27; 28) gegen eine der Flanken der Anzeigezone (2) seitlich verschoben sind.

12. Armaturenbrett nach einem der Ansprüche 1, 7 und 8, dadurch gekennzeichnet, daß die Anzeige der Geschwindigkeit auf den Skalen (10 bis 13 oder 20 bis 23) durch die Erregung von aus einem elektrolumineszenten Material bestehenden Zeichen erfolgt.

13. Armaturenbrett nach einem der vorhergehende Ansprüche, dadurch gekennzeichnet, deß jede Skala (10 bis 13 oder 20 bis 23) eine sich von den anderen Skalen unterscheidende Farbe hat.

14. Armaturenbrett nach einem der vorhergehenden Ansprüche, dadurch gekennzeichnet, daß alle von ihm angezeigten Informationen in einem Trapez eingeschrieben sind, dessen mittlerer Teil von der Zone (2) zur Geschwindigkeitsanzeige eingenommen wird, um die die Anzeigeorte von weiteren Informationen verteilt sind, wie des Kilometerzählers (4), des Kraftstoffmessers (6) und von Alarmanzeigen.

15. Armaturenbrett nach einem der vorhergehenden Ansprüche, gekennzeichnet durch einen Drehzahlmesser (3) mit geradliniger Anzeige längs einer waagerechten Skala.

**Claims**

1. Instrument panel for a motor vehicle, wherein are grouped the means for displaying the operating parameters placed at the driver's disposal, and more particularly the display of the speed of the vehicle, in which the display of the speed is made over at least a part of the speed range on substantially horizontal and superposed scales (10 to 13 and 20 to 23), each scale being allotted to a particular range of speeds, said ranges being the higher as the said scale is positioned higher in the driver's field of vision, characterised in that the length of the speed display scales (10 to 13 or 20 to 23) is substantially inversely proportional to the height of the position they occupy in the driver's field of vision, the said scales being so arranged with respect to each other as to form a triangular display area (2).

2. Instrument panel according to claim 1, characterised in that for the speeds exceeding a predetermined value, there is provided a fixed location (14) of a digital display (17) situated above the highest scale (13 or 23).

3. Instrument panel according to claim 2, characterised in that the dimensions of the numerals utilised for the digital display (17) are distinctly greater than those of the numerals appearing on the scales (10 to 13 or 20 to 23).

4. Instrument panel according to either of claims 2 and 3, characterised in that the display of the speeds exceeding the predetermined value is performed within a triangle (14) of which one side is horizontal and the opposite apex is the highest point of the speed display area (2).

5. Instrument panel according to any one of the preceding claims, characterised in that the speed display area (2) forms an isosceles triangle.

6. Instrument panel according to any one of the preceding claims, characterised in that the display of the speed of the scales (10 to 13 or 20 to 23) is effected by means of a movable luminous surface which is displaced step by step as a function of the speed.

7. Instrument panel according to any one of the preceding claims, characterised in that for each speed range corresponding to a scale (10, 11, 12 or 13) the display moves from left to right as the speed increases.

8. Instrument panel according to any one of the preceding claims, characterised in that for each speed range corresponding to a scale (20, 21, 22 or 23) the display moves in the opposite direction to that of the display of the scales directly below and above for one and the same direction of change of speed.

9. Instrument panel according to any one of claims 1 to 5, characterised in that the direct display of speed is effected on each scale (10, 11, 12 or 13) by means of a single fixed spot (24), (25), (26), (27), (28) combining its information with a coloured signal specific to each scale, extending throughout its length.

10. Instrument panel according to claim 9, characterised in that the spots (24), (25), (26), (27), (28) are situated in the mid portion of the display area (2) and that their stack forms a central vertical column.

11. Instrument panel according to claim 9, characterised in that the spots (24), (25), (26), (27), (28) are laterally staggered with respect to one of the edges of the display area (2).

12. Instrument panel according to any one of claims 1, 7 and 8, characterised in that the display of the speed on the scales (10 to 13 or 20 to 23) is effected by energisation of symbols formed from an electroluminescent substance.

13. Instrument panel according to any one of the preceding claims, characterised in that each scale (10 to 13 or 20 to 23) is different in color from the other scales.

14. Instrument panel according to any one of the preceding claims, characterised in that all the data it displays are contained within a trapezium of which the central part is occupied by the speed display area (2) around which are distributed the display locations for other data such as a distance recorder (4), fuel gauge (6) and warning lights.

15. Instrument panel according to any one of the preceding claims, characterised in that it comprises a revolution counter (3) utilising a linear display along a horizontal scale.

Fig.1

Fig.2

Fig.3

Fig:4

Fig:6

2

0 007 845

Fig: 5

Fig: 7